(19) Europäisches Patentamt / European Patent Office / Office européen des brevets

(11) **EP 2 903 879 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(21) Anmeldenummer: **13798971.1**

(22) Anmeldetag: **20.11.2013**

(51) Int Cl.:
**B61L 25/02** *(2006.01)*

(86) Internationale Anmeldenummer:
**PCT/EP2013/074248**

(87) Internationale Veröffentlichungsnummer:
**WO 2014/086582 (12.06.2014 Gazette 2014/24)**

(54) **FAHRZEUGORTUNG**

LOCATING OF VEHICLES

LOCALISATION DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2012 DE 102012222471**

(43) Veröffentlichungstag der Anmeldung:
**12.08.2015 Patentblatt 2015/33**

(73) Patentinhaber: **Siemens Aktiengesellschaft
80333 München (DE)**

(72) Erfinder: **ERNST, Horst
38118 Braunschweig (DE)**

(56) Entgegenhaltungen:
**WO-A1-2011/027166 US-A- 5 330 136**

EP 2 903 879 B1

**Beschreibung**

Die Erfindung bezieht sich auf ein Verfahren mit den Merkmalen gemäß dem Oberbegriff des Patentanspruchs 1.

Ein derartiges Verfahren ist aus der internationalen Patentanmeldung WO 2011/027166 A1 bekannt. Bei diesem vorbekannten Verfahren ist zum Orten eines Schienenfahrzeugs entlang einer Schienenstrecke ein Wellenleiter vorgesehen, der entlang der Schienenstrecke verlegt ist. In den Wellenleiter werden zeitlich nacheinander elektromagnetische Pulse eingespeist. Für jeden ausgesandten Puls wird jeweils zumindest ein durch fahrzeuginduzierte Rückstreuung des elektromagnetischen Pulses erzeugtes Rückstreumuster empfangen und ausgewertet. Durch das Auswerten der Rückstreumuster wird das Schienenfahrzeug auf der Schienenstrecke geortet.

Der Erfindung liegt die Aufgabe zugrunde, ein Verfahren zum Orten eines Fahrzeugs anzugeben, das eine zuverlässige und besonders genaue Ortung ermöglicht.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass der Wellenleiter entlang der Fahrstrecke zumindest einen Ortungsabschnitt aufweist, in dem die Vibrationsempfindlichkeit des Wellenleiters und/oder die auf den Wellenleiter einwirkende Vibration größer oder kleiner ist als außerhalb des Ortungsabschnitts, die Amplitude der empfangenen Rückstreumuster ausgewertet wird und ein Ortsignal erzeugt wird, wenn sich die Amplitude der empfangenen Rückstreumuster im zeitlichen Verlauf vergrößert oder verkleinert.

Ein wesentlicher Vorteil des erfindungsgemäßen Verfahrens ist darin zu sehen, dass bei diesem eine Fahrzeugortung möglich ist, die unabhängig von der Zeitspanne zwischen dem Senden elektromagnetischer Pulse und dem Empfang der Rückstreumuster ist. Bei dem erfindungsgemäßen Verfahren lässt sich eine Fahrzeugortung unabhängig von dieser Zeitspanne durchführen. Dies ist möglich, da der zumindest eine Ortungsabschnitt das Rückstreumuster als solches verändert, nämlich amplitudenmäßig, so dass anhand der Veränderung des Rückstreumusters als solches, nämlich dessen Amplitudenänderung, eine Fahrzeugortung auf der Fahrstrecke möglich ist. Selbst wenn sich also, beispielsweise aufgrund von Verzögerungen im Rahmen der Pulserzeugung und/oder im Rahmen der Auswertung der Rückstreumuster zeitliche Schwankungen ergeben, so haben diese keinen Einfluss auf die Genauigkeit der Ortung des Fahrzeugs, da das Fahrzeug im Bereich des oder der Ortungsabschnitte stets ein Rückstreumuster erzeugen wird, dessen Amplitudencharakteristik den Ortungsabschnitt anzeigt und unabhängig davon ist, welche Zeitdauer zwischen dem Einspeisen der Pulse in den Wellenleiter und dem Empfang bzw. der Auswertung der zugehörigen Rückstreumuster vergangen ist.

Um eine Ortung des Fahrzeugs an unterschiedlichen Stellen der Fahrstrecke bzw. im Bereich unterschiedlicher Stellen des Wellenleiters zu ermöglichen, wird es als vorteilhaft angesehen, wenn die Fahrstrecke mit einer Mehrzahl an Ortungsabschnitten ausgestattet ist, die voneinander beabstandet im Wellenleiter vorgesehen sind.

Gemäß einer besonders bevorzugten Ausgestaltung des Verfahrens ist vorgesehen, dass ein auf einer Gleisstrecke fahrendes Schienenfahrzeug geortet wird, wobei die auf den Wellenleiter einwirkende Vibration im Ortungsabschnitt mittels einer lokalen mechanischen Kopplung zwischen dem Wellenleiter und der Gleisstrecke erhöht oder mittels einer Vibrationsreduktionseinrichtung reduziert wird.

Alternativ oder zusätzlich kann die Vibrationsempfindlichkeit des Wellenleiters im Ortungsabschnitt erhöht oder erniedrigt werden, indem im Ortungsabschnitt Wellenleitermaterial mit einer höheren oder niedrigeren Vibrationsempfindlichkeit als in den beiden vor und hinter dem jeweiligen Ortungsabschnitt befindlichen Wellenleiterabschnitten eingesetzt wird.

Vorzugsweise wird zusätzlich ein den Ort des Fahrzeugs angebendes Zusatzortungssignal erzeugt.

Ein solches Zusatzortungssignal kann beispielsweise gebildet werden, indem Reflexionen an in den Wellenleiter eingebrachten und von ihrer Position bekannten Störstellen gemessen werden und das Zusatzortungssignal erzeugt wird, wenn der Empfang des Rückstreumusters mit einer Reflexion durch eine solche Störstelle zeitlich zusammenfällt. Die Anordnung der Störstellen und/oder die jeweilige Länge der Störstellen bildet vorzugsweise eine Ortskodierung.

Alternativ kann ein solches Zusatzortungssignal gebildet werden, indem die Zeitspanne zwischen dem Einspeisen der elektromagnetischen Pulse in den Wellenleiter und dem Detektieren des jeweils zugehörigen Rückstreumusters gemessen wird und anhand der Zeitspanne ein den Ort des Fahrzeugs angebendes Entfernungssignal als Zusatzortungssignal erzeugt wird.

Vorzugsweise werden das Ortsignal und das Zusatzortungssignal auf Plausibilität überprüft.

Eine solche Plausibilitätsprüfung lässt sich in besonders einfacher Weise und damit vorteilhaft durchführen, indem im Falle der Bildung eines Ortsignals die durch das Zusatzortungssignal (z. B. Entfernungssignal) angegebene Position des Fahrzeugs mit der bekannten Position des Ortungsabschnitts verglichen wird.

Vorzugsweise wird ein Fehlersignal erzeugt, wenn der Abstand zwischen der durch das Zusatzortungssignal angegebenen Position des Fahrzeugs und der bekannten Position des Ortungsabschnitts einen vorgegebenen Schwellenwert überschreitet.

Darüber hinaus wird es als vorteilhaft angesehen, wenn der Wellenleiter entlang der Fahrstrecke eine Mehrzahl an Ortungsabschnitten aufweist, in denen die Vibrationsempfindlichkeit des Wellenleiters und/oder die auf den Wellenleiter einwirkende Vibration größer oder kleiner ist als in den beiden vor und hinter dem jeweiligen Ortungsabschnitt befindlichen Wellenleiterabschnitten, und jeweils ein Ortsignal erzeugt wird, wenn sich im zeitlichen Verlauf die Amplitude der empfangenen Rückstreumuster vergrößert oder verkleinert.

Vorzugsweise wird bei einem Einfahren des Fahrzeugs in die Fahrstrecke nach einem erstmaligen Erzeugen des Ortsignals das Auftreten der weiteren Ortsignale gezählt und mit dem jeweiligen Zählerstand eine Ortungsinformation gebildet.

Auch wird es als vorteilhaft angesehen, wenn die Anordnung der Ortungsabschnitte und/oder die jeweilige Länge der Ortungsabschnitte eine Ortskodierung bildet und bei der Auswertung des zeitlichen Verlaufs der Rückstreumuster die Ortskodierung erkannt und eine Unterscheidung der Ortungsabschnitte anhand der Ortskodierung vorgenommen wird.

Die Erfindung bezieht sich darüber hinaus auf eine Ortungseinrichtung zum Orten eines Fahrzeugs entlang einer Fahrstrecke mit einem entlang der Fahrstrecke verlegten Wellenleiter, einer Pulserzeugungseinrichtung zum Erzeugen und Einspeisen zeitlich aufeinanderfolgender elektromagnetischer Pulse in den Wellenleiter und einer Detektionseinrichtung zum Detektieren von durch fahrzeuginduzierte Rückstreuung erzeugten elektromagnetischen Rückstreumustern und einer Auswerteinrichtung zum Auswerten der Rückstreumuster.

Bezüglich einer solchen Ortungseinrichtung ist erfindungsgemäß vorgesehen, dass der Wellenleiter entlang der Fahrstrecke zumindest einen Ortungsabschnitt aufweist, in dem die Vibrationsempfindlichkeit des Wellenleiters und/oder die auf den Wellenleiter einwirkende Vibration größer oder kleiner ist als in den beiden vor und hinter dem Ortungsabschnitt befindlichen Wellenleiterabschnitten, und die Auswerteinrichtung derart ausgestaltet ist, dass sie eine Ortung des Fahrzeugs zumindest auch unter Heranziehung der Amplitude des Rückstreumusters durchführt.

Bezüglich der Vorteile der erfindungsgemäßen Ortungseinrichtung sei auf die obigen Ausführungen im Zusammenhang mit dem erfindungsgemäßen Verfahren verwiesen, da die Vorteile des erfindungsgemäßen Verfahrens denen der erfindungsgemäßen Ortungseinrichtung im Wesentlichen entsprechen.

Vorzugsweise ist der Wellenleiter neben einer Gleisstrecke verlegt, und die auf den Wellenleiter einwirkende Vibration im Ortungsabschnitt ist vorzugsweise mittels einer lokalen mechanischen Kopplung zwischen dem Wellenleiter und der Gleisstrecke erhöht oder durch eine Vibrationsreduktionseinrichtung reduziert.

Zusätzlich oder alternativ kann der Wellenleiter im Ortungsabschnitt Wellenleitermaterial mit einer höheren oder kleineren Vibrationsempfindlichkeit als in den beiden vor und hinter dem Ortungsabschnitt befindlichen Wellenleiterabschnitten aufweisen.

Besonders bevorzugt weist der Wellenleiter entlang der Fahrstrecke eine Mehrzahl an Ortungsabschnitten auf, in denen die Vibrationsempfindlichkeit des Wellenleiters und/oder die auf den Wellenleiter einwirkende Vibration größer oder kleiner ist als in den beiden vor und hinter dem jeweiligen Ortungsabschnitt befindlichen Wellenleiterabschnitten.

Die Anordnung der Ortungsabschnitte und/oder die jeweilige Länge der Ortungsabschnitte bildet vorzugsweise eine Ortskodierung.

Die Erfindung wird nachfolgend anhand von Ausführungsbeispielen näher erläutert; dabei zeigen beispielhaft

Figur 1      ein Ausführungsbeispiel für eine erfindungsgemäße Ortungseinrichtung zum Orten eines Fahrzeugs entlang einer Fahrstrecke,

Figuren 2-4      beispielhaft Rückstreumuster, die ein Fahrzeug auf der Fahrstrecke gemäß Figur 1 erzeugt,

Figur 5      ein Ausführungsbeispiel für eine erfindungsgemäße Ortungseinrichtung, bei der Ortungsabschnitte eine Ortskodierung bilden,

Figur 6      ein weiteres Ausführungsbeispiel für eine erfindungsgemäße Ortungseinrichtung,

Figuren 7-9      beispielhaft Rückstreumuster, die ein Fahrzeug auf der Fahrstrecke gemäß Figur 6 erzeugt,

Figur 10      ein weiteres Ausführungsbeispiel für eine erfindungsgemäße Ortungseinrichtung und

Figur 11      ein Ausführungsbeispiel für ein Verbindungselement näher im Detail.

In den Figuren werden der Übersicht halber für identische oder vergleichbare Komponenten stets dieselben Bezugszeichen verwendet.

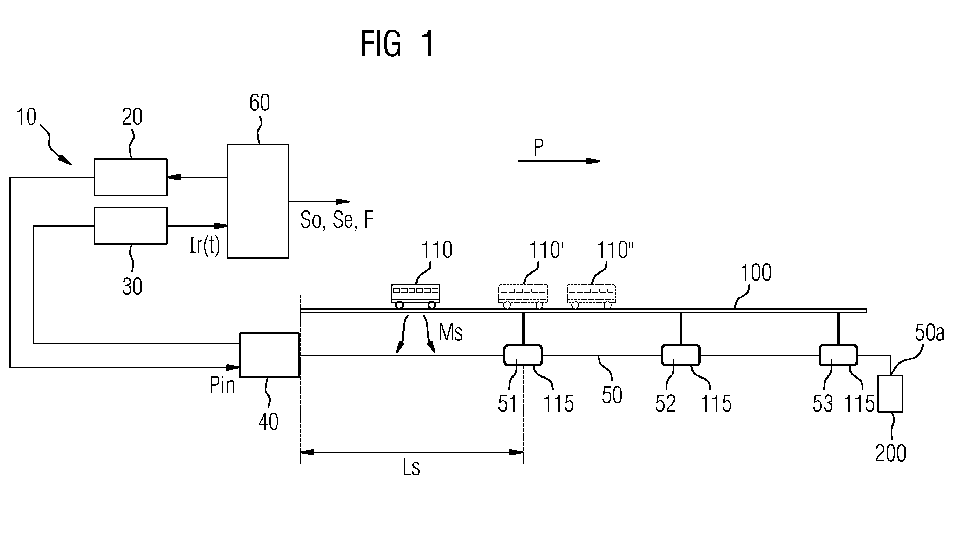

Die Figur 1 zeigt eine Ortungseinrichtung 10, die eine Pulserzeugungseinrichtung 20, eine Detektionseinrichtung 30, eine optische Koppeleinrichtung 40, einen Wellenleiter 50 z. B. in Form eines optischen Lichtwellenleiters und eine Auswerteinrichtung 60 umfasst.

Die Pulserzeugungseinrichtung 20 weist vorzugsweise einen nicht weiter gezeigten Laser auf, der es ermöglicht, regelmäßig, beispielsweise mit einer fest vorgegebenen Pulsrate, kurze elektromagnetische, insbesondere optische, Pulse zu erzeugen und über die Koppeleinrichtung 40 in den Wellenleiter 50 einzuspeisen. Die Pulserzeugungseinrichtung 20 wird von der Auswerteinrichtung 60 vorzugsweise angesteuert, so dass der Auswerteinrichtung 60 die Zeitpunkte der Pulserzeugung zumindest näherungsweise bekannt sind.

Die Detektionseinrichtung 30 weist beispielsweise einen Fotodetektor auf, der das Detektieren elektromagnetischer Strahlung ermöglicht. Die Detektionseinrichtung 30 übermittelt ihre Messsignale an die Auswerteinrichtung 60, die diese auswertet.

In der Figur 1 lässt sich erkennen, dass der Wellenleiter 50 entlang einer Schienenstrecke 100 angeordnet ist. Auf der Schienenstrecke 100 fährt ein Schienenfahrzeug 110 entlang der Pfeilrichtung P von links nach rechts. Bei der Darstellung gemäß der Figur 1 ist die Bewegung des Schienenfahrzeugs 110 entlang der Pfeilrichtung P durch zwei weitere Positionen symbolisiert (vgl. Schienenfahrzeugpositionen 110' und 110").

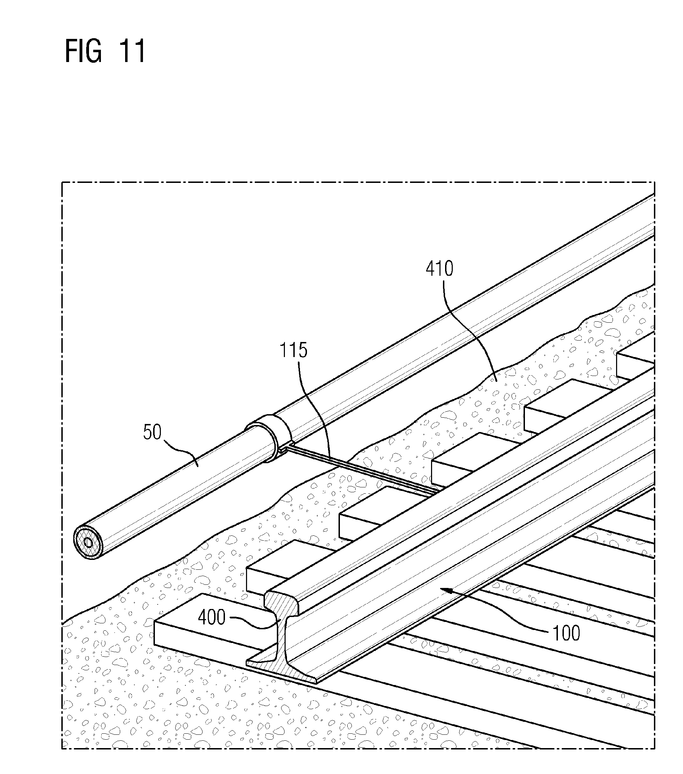

Die Figur 1 zeigt, dass der Wellenleiter 50 mit Ortungsabschnitten 51, 52 und 53 ausgestattet ist, in denen die auf den Wellenleiter 50 einwirkende Vibration durch das passierende Schienenfahrzeug größer ist als außerhalb der Ortungsabschnitte 51, 52 und 53. Die Erhöhung der Vibration in den Ortungsabschnitten 51 bis 53 beruht beispielsweise darauf, dass der Wellenleiter 50 in diesen Abschnitten mit den Gleisen der Schienenstrecke 100 durch ein oder mehrere Verbindungselemente 115 in Form von Stangen, Rohren, Dornen oder dergleichen (vgl. Fig. 11) mechanisch gekoppelt ist. Zusätzlich oder alternativ kann in den Ortungsabschnitten 51 bis 53 auch ein Wellenleitermaterial eingesetzt werden, das von sich aus eine höhere Vibrationsempfindlichkeit aufweist als das Wellenleitermaterial außerhalb der Ortungsabschnitte 51, 52 und 53.

Die Ortungseinrichtung 10 gemäß Figur 1 lässt sich zum Orten des Schienenfahrzeugs 110 beispielsweise wie folgt betreiben:

Die Auswerteinrichtung 60 steuert die Pulserzeugungseinrichtung 20 derart an, dass diese zeitlich nacheinander elektromagnetische Pulse Pin über die Koppeleinrichtung 40 in den Wellenleiter 50 einspeist. Die erzeugten elektromagnetischen Pulse laufen entlang der Pfeilrichtung P in der Figur 1 von links nach rechts und werden vorzugsweise am Wellenleiterende 50a von einer Absorptionseinrichtung 200 absorbiert.

Durch das auf der Schienenstrecke 100 fahrende Schienenfahrzeug 110 wird der Wellenleiter 50 lokal erschüttert bzw. in Schwingungen versetzt; dies ist in der Figur 1 durch Pfeile mit dem Bezugszeichen Ms gekennzeichnet. Aufgrund dieser Schwingungen bzw. aufgrund der Erschütterungen des Wellenleiters 50 wird es lokal in dem Bereich, in dem sich das Schienenfahrzeug 110 gerade befindet, zu einer Rückstreuung der elektromagnetischen Strahlung kommen. Die rückgestreute Strahlung weist ein Rückstreumuster auf, das charakteristisch für die Erschütterung ist, die von dem Schienenfahrzeug 110 hervorgerufen und in den Wellenleiter 50 eingekoppelt wird.

Die rückgestreute Strahlung läuft entgegen der Fahrtrichtung P des Schienenfahrzeugs in Richtung Koppeleinrichtung 40 und in Richtung Detektionseinrichtung 30 und wird dort von der Detektionseinrichtung 30 detektiert. Die Detektionseinrichtung 30 ist derart ausgestaltet, dass sie die Intensität der zurückgestreuten Strahlung misst und ein entsprechendes Messsignal an die Auswerteinrichtung 60 weiterleitet. Die Intensität der zurückgestreuten Strahlung ist in der Figur 1 mit dem Bezugszeichen Ir(t) gekennzeichnet.

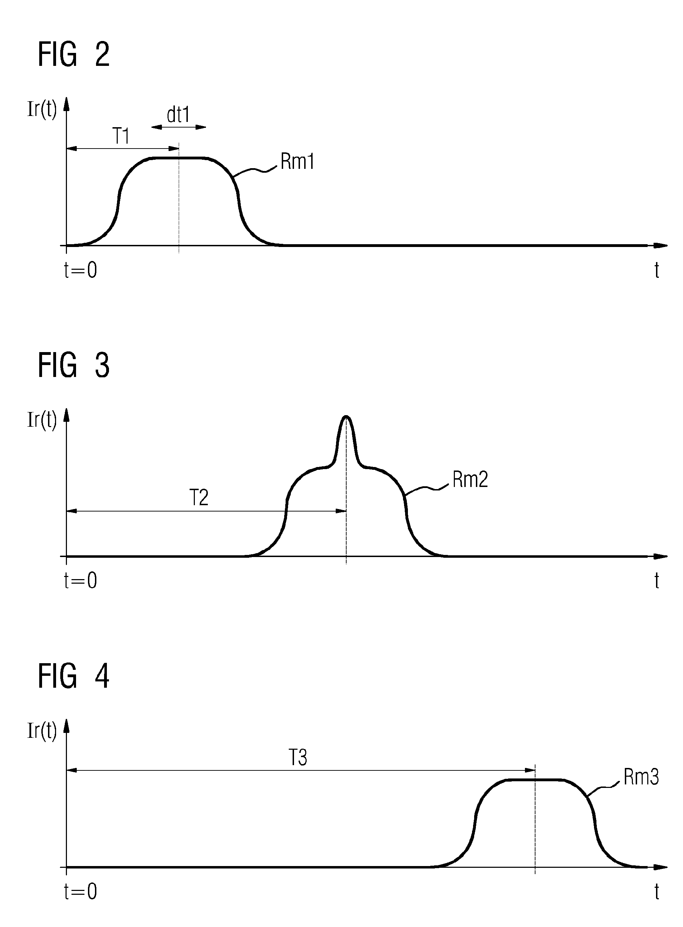

Die Auswerteinrichtung 60 wird die zurückgestreute Strahlung Ir(t) und die darin enthaltenen Rückstreumuster auswerten. Wenn sich die Amplitude der empfangenen Rückstreumuster im zeitlichen Verlauf vergrößert, so wird sie auf das Passieren eines der Ortungsabschnitte 51 bis 53 schließen und ein Ortsignal So erzeugen. Dies soll näher anhand der Figuren 2 bis 4 erläutert werden.

In der Figur 2 ist beispielhaft ein Rückstreumuster Rm1 dargestellt, das in der Auswerteinrichtung 60 eintrifft, wenn zum Zeitpunkt t=0 ein elektromagnetischer Puls von der Pulseinrichtung 20 in den Wellenleiter 50 eingestrahlt worden ist. Die Länge des empfangen Rückstreumusters Rm1 ist in der Figur 2 mit dem Bezugszeichen dt1 gekennzeichnet.

Das Rückstreumuster Rm1 bezieht sich auf die Position des Schienenfahrzeugs gemäß Figur 1, wie sie dort mit durchgezogenen Linien und dem Bezugszeichen 110 gekennzeichnet ist.

Bewegt sich nun das Schienenfahrzeug 110 entlang der Pfeilrichtung P gemäß Figur 1 weiter und erreicht die mit dem Bezugszeichen 110' gekennzeichnete Position, so wird es den Ortungsabschnitt 51 des Wellenleiters 50 in mechanische Schwingungen versetzen. Im Bereich des Ortungsabschnitts 51 ist die auf den Wellenleiter 50 wirkende Vibration und/oder dessen Vibrationsempfindlichkeit jedoch sehr viel größer als außerhalb der Ortungsabschnitte 51-53, so dass es zu einer Erhöhung der Amplitude des Rückstreumusters kommt. Dies ist in der Figur 3 dargestellt.

Verlässt das Schienenfahrzeug 110 den Bereich des Ortungsabschnitts 51 wieder und gelangt in den Bereich zwischen den beiden Ortungsabschnitten 51 und 52 gemäß Figur 1 (vgl. die mit dem Bezugszeichen 110" gekennzeichnete Position des Schienenfahrzeugs in Figur 1), so wird sich die Amplitude des Rückstreumusters wieder auf das normale Maß reduzieren. Demgemäß entspricht die Amplitude des Rückstreumusters Rm3 (vgl. Figur 4) wieder der ursprünglichen Amplitude des Rückstreumusters Rm1 gemäß Figur 2.

Zusammengefasst ist die Auswerteinrichtung 60 somit in der Lage, anhand der Amplituden der Rückstreumuster Rm1, Rm2 und Rm3 den Ort des Schienenfahrzeugs 110 auf der Schienenstrecke 100 zu bestimmen, weil die örtliche Lage der Ortungsabschnitte 51 bis 53 entlang der Schienenstrecke 100 bekannt ist.

Durch ein Abzählen der von der Auswerteinrichtung 60 ausgangsseitig erzeugten Ortsignale So kann also die Fahrt des Schienenfahrzeugs verfolgt werden.

Die Anordnung der Ortungsabschnitte und/oder die jeweilige Länge der Ortungsabschnitte bildet vorzugsweise eine Ortskodierung.

Neben einer Ortung des Schienenfahrzeugs 110 anhand der Ortungsabschnitte 51 bis 53 kann die Detektionseinrichtung 30 auch eine Ortung anhand der Zeitspannen vornehmen, die sich zwischen dem Einspeisen der elektromagnetischen Pulse Pin in den Wellenleiter 50 und dem Detektieren des jeweils zugehörigen Rückstreumusters Rm1, Rm2 und Rm3 ergeben.

In den Figuren 2-4 lässt sich erkennen, dass die Zeitspannen zwischen dem jeweiligen elektromagnetischen Anregepuls Pin und dem zugehörigen Rückstreumuster Rm1, Rm2 und Rm3 während der Fahrt des Schienenfahrzeugs 110 auf der Schienenstrecke 100 anwachsen; dies ist darauf zurückzuführen, dass die Laufzeit der elektromagnetischen Pulse und die Laufzeit der elektromagnetischen Rückstreumuster in dem Wellenleiter 50 mit zunehmendem Abstand des Schienenfahrzeugs 110 von der Pulserzeugungseinrichtung 20 bzw. der Detektionseinrichtung 30 zunehmen.

Die Auswerteinrichtung 60 ist somit in der Lage, anhand der Zeitspannen T1, T2 und T3 die Entfernung und damit den Ort des Schienenfahrzeugs 110 zu bestimmen und ein entsprechendes Entfernungssignal Se, das ein Zusatzortungssignal bildet, zu erzeugen. Die Entfernung Ls des Schienenfahrzeugs 110' in Figur 1 kann beispielsweise berechnet werden gemäß:

$$Ls = 1/2 * T2/V$$

wobei V die Geschwindigkeit der Pulse im Wellenleiter 50 angibt. Die Zeitspanne T2 kann der Messung gemäß Figur 3 entnommen werden. Der Faktor 1/2 berücksichtigt, dass die Strahlung den jeweiligen Wellenleiterabschnitt zweimal durchlaufen muss, nämlich einmal in Hinrichtung und einmal in Rückrichtung. Für die Geschwindigkeit V gilt beispielsweise:

$$V = c0/n$$

wobei c0 die Lichtgeschwindigkeit und n die Brechzahl im Wellenleiter 50 angibt.

Die Detektionseinrichtung 30 ist also in der Lage, den Ort des Schienenfahrzeugs 110 zusätzlich auch anhand der Zeitspannen T1, T2 und T3 zu bestimmen, die zwischen dem Senden der Pulse Pin und dem Empfang des jeweiligen Rückstreumusters Rm1, Rm2 und Rm3 vergehen.

Als besonders vorteilhaft wird es angesehen, wenn die Auswerteinrichtung 60 im Falle einer Ortung des Schienenfahrzeugs 110 im Bereich eines der Ortungsabschnitte 51 bis 53 und der Erzeugung eines entsprechenden Ortsignals So zusätzlich eine Plausibilitätsprüfung vornimmt.

Eine solche Plausibilitätsprüfung kann beispielsweise derart erfolgen, dass die Auswerteinrichtung 60 bei Erkennen eines der Ortungsabschnitte 51 bis 53 und der Erzeugung eines Ortsignals So die Zeitspanne zwischen Pulserzeugung und Eintreffen des Rückstreumusters (vgl. Zeitspanne T2 gemäß Figur 3) auswertet und die Entfernung Ls des Schienenfahrzeugs 110 bestimmt. Anschließend kann die Auswerteinrichtung 60 prüfen, ob das Entfernungssignal Se mit dem gebildeten Ortsignal So übereinstimmt.

Beispielsweise wird die Auswerteinrichtung 60 ein Fehlersignal F erzeugen, wenn die Differenz zwischen der durch das Entfernungssignal Se angegebenen Position Ls und der bekannten Position des erkannten Ortungsabschnitts 51 einen vorgegebenen Schwellenwert überschreitet. Entsprechendes gilt für Plausibilitätsprüfungen bei den anderen Ortungsabschnitten.

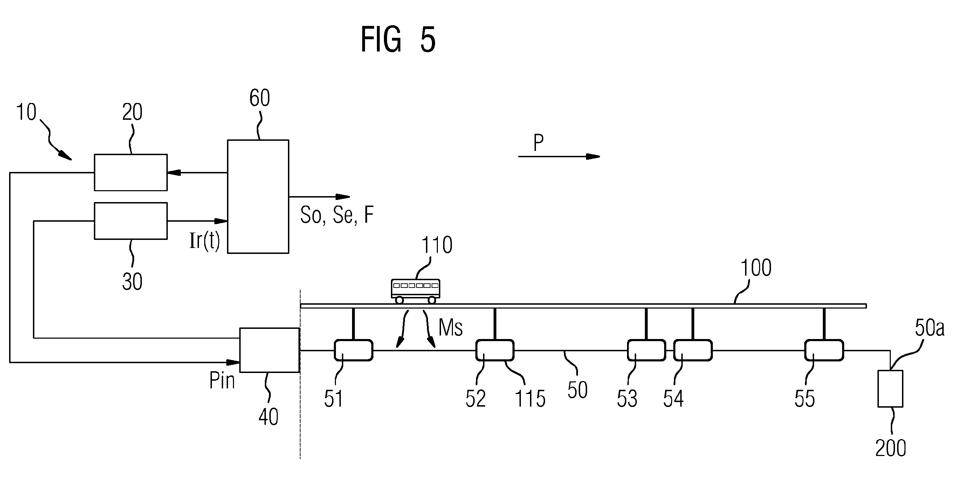

Die Figur 5 zeigt ein Ausführungsbeispiel für eine erfindungsgemäße Ortungseinrichtung 10, bei der der Wellenleiter 50 eine Vielzahl an Ortungsabschnitten 51 bis 55 aufweist, die derart angeordnet sind, dass sie eine Ortskodierung bilden. Durch diese Ortskodierung ist es möglich, den Ort des Schienenfahrzeugs 110 auf der Schienenstrecke 100 festzustellen, ohne dass das Auftreten der Ortungsabschnitte beobachtet und gezählt werden muss.

Aus Gründen der Übersicht ist die Ortskodierung durch eine kodierte Anordnung der Ortungsabschnitte 51 bis 55 nur anhand weniger Ortungsabschnitte angedeutet; es ist selbstverständlich, dass sich die Ortskodierung hinsichtlich ihrer Genauigkeit und Auswertbarkeit optimieren lässt, wenn eine sehr viel größere Anzahl an Ortungsabschnitten eingesetzt wird.

Die Ortskodierung durch eine örtliche Kodierung der Anordnung der Ortungsabschnitte kann beispielsweise dadurch erfolgen, dass durch die Ortungsabschnitte binäre Kodierungsmuster gebildet werden.

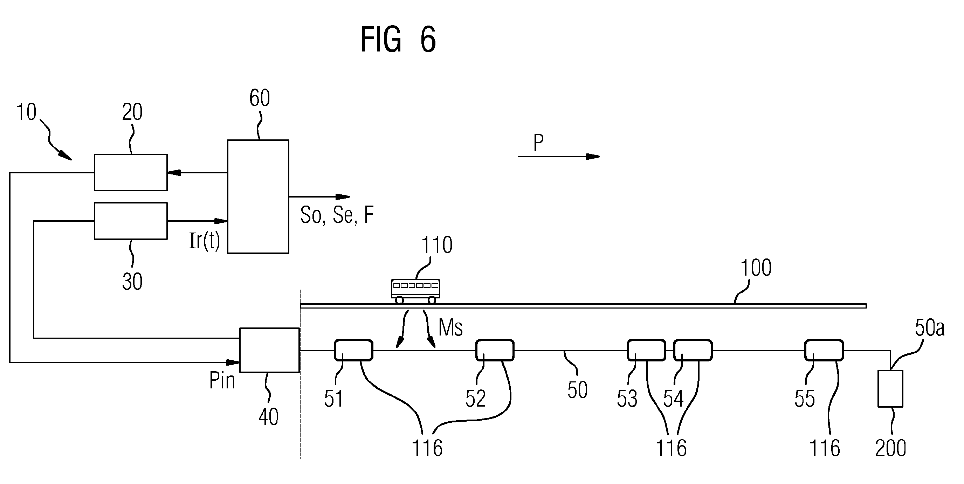

Die Figur 6 zeigt ein Ausführungsbeispiel für eine Ortungseinrichtung 10, bei der der Wellenleiter 50 mit Ortungsabschnitten 51-55 ausgestattet ist, in denen die auf den Wellenleiter 50 einwirkende Vibration durch das passierende Schienenfahrzeug kleiner ist als außerhalb der Ortungsabschnitte 51-55. Die Reduktion der Vibration in den Ortungsabschnitten 51 bis 55 beruht beispielsweise darauf, dass der Wellenleiter 50 in diesen Abschnitten von den Gleisen der Schienenstrecke 100 durch ein oder mehrere Dämpfungselemente 116, die jeweils eine Vibrationsreduktionseinrichtung bilden, mechanisch ganz oder zumindest etwas entkoppelt wird. Zusätzlich oder alternativ kann in den Ortungsabschnitten 51 bis 55 auch ein Wellenleitermaterial eingesetzt werden, das von sich aus eine niedrigere Vibrationsempfindlichkeit aufweist als das Wellenleitermaterial außerhalb der Ortungsabschnitte 51 bis 55.

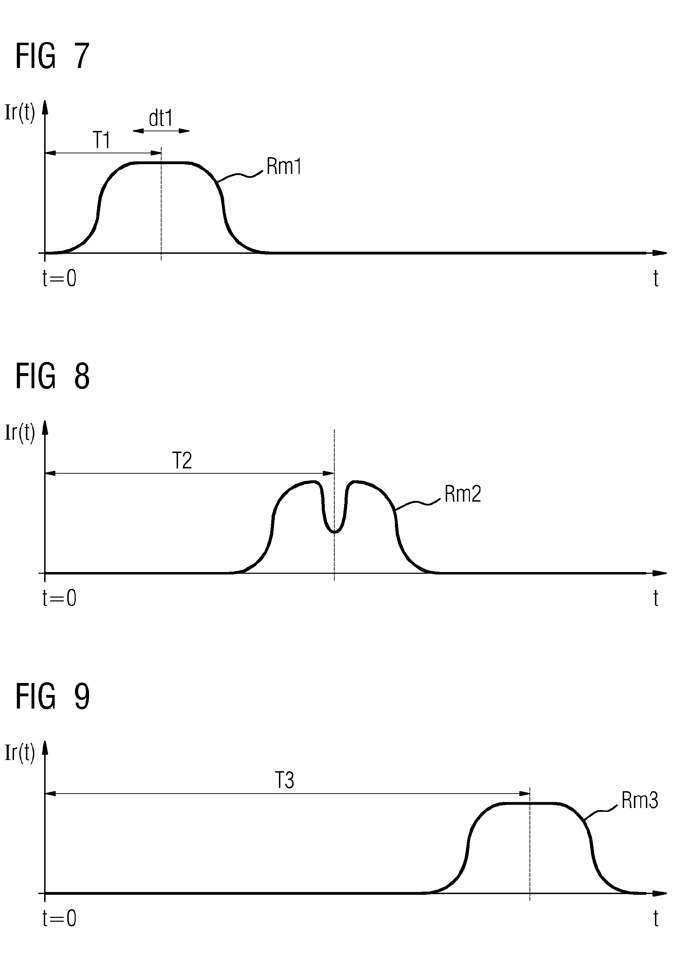

Bewegt sich nun das Schienenfahrzeug 110 entlang der Pfeilrichtung P gemäß Figur 6, so wird es den Ortungsabschnitt 51 des Wellenleiters 50 in mechanische Schwingungen versetzen. Im Bereich des Ortungsabschnitts 51 ist die auf den Wellenleiter 50 wirkende Vibration und/oder dessen Vibrationsempfindlichkeit jedoch sehr viel kleiner als außerhalb der Ortungsabschnitte 51-55, so dass es zu einer Reduktion der Amplitude des Rückstreumusters kommt. Dies ist in der Figur 8 dargestellt.

Verlässt das Schienenfahrzeug 110 den Bereich des Ortungsabschnitts 51 wieder und gelangt in den Bereich zwischen den beiden Ortungsabschnitten 51 und 52 (vgl. die mit dem Bezugszeichen 110 gekennzeichnete Position des Schienenfahrzeugs in Figur 6), so wird sich die Amplitude des Rückstreumusters wieder auf das normale Maß erhöhen. Demgemäß entspricht die Amplitude des Rückstreumusters Rm3 (vgl. Figur 9) wieder der ursprünglichen Amplitude des Rückstreumusters Rm1 gemäß Figur 7.

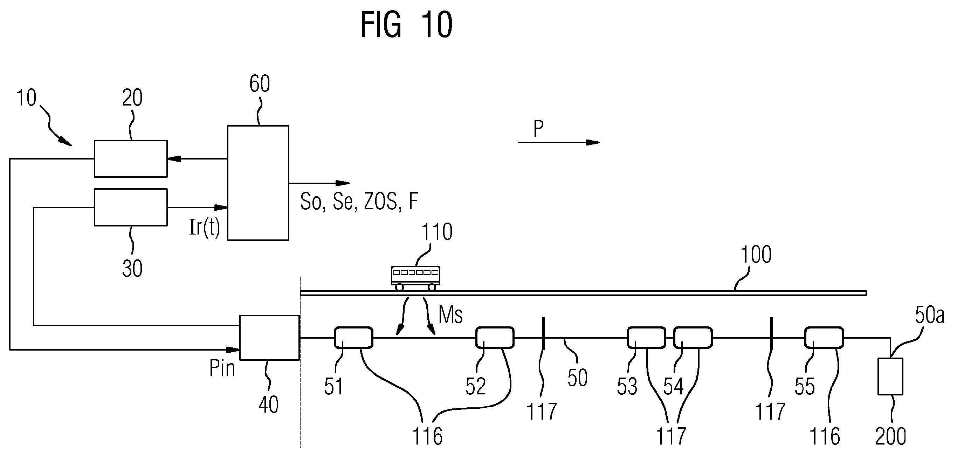

Die Figur 10 zeigt ein Ausführungsbeispiel für eine Ortungseinrichtung 10, bei der Reflexionen an in den Wellenleiter eingebrachten und von ihrer Position bekannten Störstellen 117 gemessen werden und ein Zusatzortungssignal ZOS erzeugt wird, wenn der Empfang des Rückstreumusters mit einer Reflexion durch eine solche Störstelle zeitlich zusammenfällt.

Die Figur 11 zeigt ein Ausführungsbeispiel für ein Verbindungselement 115, mit dem das Gleis 400 der Schienenstrecke 100 mit dem Wellenleiter 50 lokal mechanisch gekoppelt wird. Bei dem Verbindungselement 115 kann es sich beispielsweise um eine Stange, einen Dorn oder ein Rohr handeln. Das Verbindungselement ist senkrecht vom Gleis 400 durch das Gleisbett 410 zum Wellenleiter 50 geführt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Orten eines Schienenfahrzeugs (110) entlang einer Schienenstrecke (100), entlang derer ein Wellenleiter (50) verlegt ist, wobei bei dem Verfahren zeitlich nacheinander elektromagnetische Pulse (Pin) in den Wellenleiter (50) eingespeist werden und für jeden ausgesandten Puls jeweils zumindest ein durch fahrzeuginduzierte Rückstreuung des elektromagnetischen Pulses erzeugtes Rückstreumuster (Rm1, Rm2, Rm3) empfangen und ausgewertet wird,
   **dadurch gekennzeichnet, dass**

   - der Wellenleiter (50) entlang der Schienenstrecke (100) zumindest einen Ortungsabschnitt (51-55) aufweist, in dem die Vibrationsempfindlichkeit des Wellenleiters (50) und/oder die auf den Wellenleiter (50) einwirkende Vibration größer oder kleiner ist als außerhalb des Ortungsabschnitts (51-55),
   - die Amplitude der empfangenen Rückstreumuster (Rm1, Rm2, Rm3) ausgewertet wird und
   - ein Ortsignal (So) erzeugt wird, wenn sich die Amplitude der empfangenen Rückstreumuster (Rm1, Rm2, Rm3) im zeitlichen Verlauf vergrößert oder verkleinert.

2. Verfahren nach Anspruch 1,
   **dadurch gekennzeichnet, dass**
   ein auf einer Schienenstrecke (100) fahrendes Schienenfahrzeug (110) geortet wird, wobei die auf den Wellenleiter (50) einwirkende Vibration im Ortungsabschnitt (51-55) mittels einer lokalen mechanischen Kopplung zwischen dem Wellenleiter (50) und der Schienenstrecke (100) erhöht oder mittels einer Vibrationsreduktionseinrichtung reduziert wird.

3. Verfahren nach Anspruch 1 oder 2,
   **dadurch gekennzeichnet, dass**
   die Vibrationsempfindlichkeit des Wellenleiters (50) im Ortungsabschnitt (51-55) erhöht oder erniedrigt wird, indem im Ortungsabschnitt (51-55) Wellenleitermaterial mit einer höheren oder niedrigeren Vibrationsempfindlichkeit als in den beiden vor und hinter dem Ortungsabschnitt (51-55) befindlichen Wellenleiterabschnitten eingesetzt wird.

4. Verfahren nach einem der voranstehenden Ansprüche,
   **dadurch gekennzeichnet, dass**
   zusätzlich ein den Ort (Ls) des Schienenfahrzeugs (110) angebendes Zusatzortungssignal (ZOS) erzeugt wird.

5. Verfahren nach Anspruch 4,
   **dadurch gekennzeichnet, dass**

   - Reflexionen an in den Wellenleiter eingebrachten und von ihrer Position bekannten Störstellen (117) gemessen werden und
   - das Zusatzortungssignal (ZOS) erzeugt wird, wenn der Empfang des Rückstreumusters (Rm1, Rm2, Rm3) mit einer Reflexion durch eine solche Störstelle (117) zeitlich zusammenfällt.

6. Verfahren nach Anspruch 4,
   **dadurch gekennzeichnet, dass**

   - die Zeitspanne (T1, T2, T3) zwischen dem Einspeisen der elektromagnetischen Pulse in den Wellenleiter (50) und dem Detektieren des jeweils zugehörigen Rückstreumusters (Rm1, Rm2, Rm3) gemessen wird und

- anhand der Zeitspanne (T1, T2, T3) ein den Ort (Ls) des Schienenfahrzeugs (110) angebendes Entfernungssignal (Se) als Zusatzortungssignal (ZOS) erzeugt wird.

7. Verfahren nach einem der voranstehenden Ansprüche 4-6,
**dadurch gekennzeichnet, dass**
ein Fehlersignal (F) erzeugt wird, wenn der Abstand zwischen der durch das Zusatzortungssignal (ZOS) angegebenen Position des Fahrzeugs (110) und der bekannten Position des Ortungsabschnitts (51-55) einen vorgegebenen Schwellenwert überschreitet.

8. Verfahren nach einem der voranstehenden Ansprüche,
**dadurch gekennzeichnet, dass**

- der Wellenleiter (50) entlang der Schienenstrecke (100) eine Mehrzahl an Ortungsabschnitten (51-55) aufweist, in denen die Vibrationsempfindlichkeit des Wellenleiters (50) und/oder die auf den Wellenleiter (50) einwirkende Vibration größer oder kleiner ist als in den beiden vor und hinter dem jeweiligen Ortungsabschnitt (51-55) befindlichen Wellenleiterabschnitten, und
- jeweils ein Ortsignal (So) erzeugt wird, wenn sich im zeitlichen Verlauf die Amplitude der empfangenen Rückstreumuster (Rm1, Rm2, Rm3) vergrößert oder verkleinert.

9. Verfahren nach Anspruch 8,
**dadurch gekennzeichnet, dass**
bei einem Einfahren des Schienenfahrzeugs (110) in die Schienenstrecke (100) nach einem erstmaligen Erzeugen des Ortsignals (So) das Auftreten der weiteren Ortsignale (So) gezählt wird und mit dem jeweiligen Zählerstand eine Ortungsinformation gebildet wird.

10. Verfahren nach einem der voranstehenden Ansprüche 8-9, **dadurch gekennzeichnet, dass**

- die Anordnung der Ortungsabschnitte (51-55) und/oder die jeweilige Länge der Ortungsabschnitte (51-55) eine Ortskodierung bildet und
- bei der Auswertung des zeitlichen Verlaufs der Rückstreumuster (Rm1, Rm2, Rm3) die Ortskodierung erkannt und eine Unterscheidung der Ortungsabschnitte (51-55) anhand der Ortskodierung vorgenommen wird.

11. Ortungseinrichtung zum Orten eines Schienenfahrzeugs (110) entlang einer Schienenstrecke (100) mit

- einem entlang der Schienenstrecke (100) verlegten Wellenleiter (50),
- einer Pulserzeugungseinrichtung (20) zum Erzeugen und Einspeisen zeitlich aufeinanderfolgender elektromagnetischer Pulse (Pin) in den Wellenleiter (50),
- einer Detektionseinrichtung (30) zum Detektieren von durch fahrzeuginduzierte Rückstreuung erzeugten elektromagnetischen Rückstreumustern (Rm1, Rm2, Rm3) und
- einer Auswerteinrichtung (60) zum Auswerten der Rückstreumuster (Rm1, Rm2, Rm3),

**dadurch gekennzeichnet, dass**

- der Wellenleiter (50) entlang der Schienenstrecke (100) zumindest einen Ortungsabschnitt (51-55) aufweist, in dem die Vibrationsempfindlichkeit des Wellenleiters (50) und/oder die auf den Wellenleiter (50) einwirkende Vibration größer oder kleiner ist als außerhalb des Ortungsabschnitts (51-55), und
- die Auswerteinrichtung (60) derart ausgestaltet ist, dass sie eine Ortung des Schienenfahrzeugs (110) zumindest auch unter Heranziehung der Amplitude des Rückstreumusters (Rm1, Rm2, Rm3) durchführt.

12. Ortungseinrichtung nach Anspruch 11,
**dadurch gekennzeichnet, dass**

- der Wellenleiter (50) neben einer Schienenstrecke (100) verlegt ist und
- die auf den Wellenleiter (50) einwirkende Vibration im Ortungsabschnitt (51-55) mittels einer lokalen mechanischen Kopplung zwischen dem Wellenleiter (50) und der Schienenstrecke (100) erhöht oder durch eine Vibrationsreduktionseinrichtung reduziert ist.

13. Ortungseinrichtung nach Anspruch 11 oder 12,
**dadurch gekennzeichnet, dass**
der Wellenleiter (50) im Ortungsabschnitt (51-55) Wellenleitermaterial mit einer höheren oder kleineren Vibrationsempfindlichkeit als in den beiden vor und hinter dem Ortungsabschnitt (51-55) befindlichen Wellenleiterabschnitten aufweist.

14. Ortungseinrichtung nach einem der voranstehenden Ansprüche 11 bis 13,
**dadurch gekennzeichnet, dass**
der Wellenleiter (50) entlang der Schienenstrecke (100) eine Mehrzahl an Ortungsabschnitten (51-55) aufweist, in denen die Vibrationsempfindlichkeit des Wellenleiters (50) und/oder die auf den Wellenleiter (50) einwirkende Vibration größer oder kleiner ist als in den beiden vor und hinter dem jeweiligen Ortungsabschnitt (51-55) befindlichen Wellenleiterabschnitten.

15. Ortungseinrichtung nach Anspruch 14,

**dadurch gekennzeichnet, dass**
die Anordnung der Ortungsabschnitte (51-55) und/oder die jeweilige Länge der Ortungsabschnitte (51-55) eine Ortskodierung bildet.

## Claims

1. Method for determining the location of a rail vehicle (110) along a section of rail (100) along which a waveguide (50) is laid, wherein in the method chronologically successive electromagnetic pulses (Pin) are fed into the waveguide (50) and in each case at least one backscatter pattern (Rm1, Rm2, Rm3) which is generated by vehicle-induced backscattering of the electromagnetic pulse is received for each emitted pulse and evaluated,
**characterized in that**

   - the waveguide (50) along the section of rail (100) has at least one location-determining section (51-55) in which the vibration sensitivity of the waveguide (50) and/or the vibration acting on the waveguide (50) is greater than or less than outside the location-determining section (51-55),
   - the amplitude of the received backscatter patterns (Rm1, Rm2, Rm3) is evaluated, and
   - a location signal (So) is generated if the amplitude of the received backscatter patterns (Rm1, Rm2, Rm3) increases or decreases in the chronological profile.

2. Method according to Claim 1,
**characterized in that** the location of a rail vehicle (110) which is traveling on a section of rail (100) is determined, wherein the vibration, acting on the waveguide (50), in the location-determining section (51-55) is increased by means of a local mechanical coupling between the waveguide (50) and the section of rail (100) or reduced by means of a vibration-reducing device.

3. Method according to Claim 1 or 2,
**characterized in that** the vibration sensitivity of the waveguide (50) in the location-determining section (51-55) is increased or decreased by using in the location-determining section (51-55) waveguide material with a higher or lower vibration sensitivity than in the two waveguide sections located in front of and behind the location-determining section (51-55).

4. Method according to one of the preceding claims,
**characterized in that** in addition an additional location-determining signal (ZOS) which indicates the location (Ls) of the rail vehicle (110) is generated.

5. Method according to Claim 4,

**characterized in that**

   - reflections at interference points (117) which are introduced into the waveguide and whose position is known are measured, and
   - the additional location-determining signal (ZOS) is generated if the reception of the backscatter pattern (Rm1, Rm2, Rm3) coincides chronologically with a reflection by such an interference point (117).

6. Method according to Claim 4,
**characterized in that**

   - the time period (T1, T2, T3) between the feeding of the electromagnetic pulses into the waveguide (50) and the detection of the respectively associated backscatter pattern (Rm1, Rm2, Rm3) is measured, and
   - a distance signal (Se) which indicates the location (Ls) of the rail vehicle (110) is generated as an additional location-determining signal (ZOS) on the basis of the time period (T1, T2, T3).

7. Method according to one of the preceding Claims 4-6,
**characterized in that** a fault signal (F) is generated if the distance between the position of the vehicle (110) indicated by the additional location-determining signal (ZOS) and the known position of the location-determining section (51-55) exceeds a predefined threshold value.

8. Method according to one of the preceding claims,
**characterized in that**

   - the waveguide (50) along the section of rail (100) has a multiplicity of location-determining sections (51-55) in which the vibration sensitivity of the waveguide (50) and/or the vibration acting on the waveguide (50) is greater than or less than in the two waveguide sections located in front of and behind the respective location-determining section (51-55), and
   - in each case a location signal (So) is generated if the amplitude of the received backscatter patterns (Rm1, Rm2, Rm3) in the chronological profile increases or decreases.

9. Method according to Claim 8,
**characterized in that** when the rail vehicle (110) drives into the section of rail (100) after an initial generation of the location signal (So) the occurrence of the further location signals (So) is counted, and location-determining information is formed with the respective counter reading.

**10.** Method according to one of the preceding Claims 8-9,
**characterized in that**

- the arrangement of the location-determining sections (51-55) and/or the respective length of the location-determining sections (51-55) forms location coding, and
- during the evaluation of the chronological profile of the backscatter patterns (Rm1, Rm2, Rm3) the location coding is detected and the location-determining sections (51-55) are differentiated on the basis of the location coding.

**11.** Location-determining device for determining the location of a rail vehicle (110) along a section of rail (100), having

- a waveguide (50) which is laid along the section of rail (100),
- a pulse-generating device (20) for generating and feeding chronologically successive electromagnetic pulses (Pin) into the waveguide (50),
- a detection device (30) for detecting electromagnetic backscatter patterns (Rm1, Rm2, Rm3) generated by vehicle-induced backscatter, and
- an evaluation device (60) for evaluating the backscatter patterns (Rm1, Rm2, Rm3),

**characterized in that**

- the waveguide (50) along the section of rail (100) has at least one location-determining section (51-55) in which the vibration sensitivity of the waveguide (50) and/or the vibration acting on the waveguide (50) is greater than or less than outside the location-determining section (51-55), and
- the evaluation device (60) is configured in such a way that it carries out a process of determining the location of the rail vehicle (110) at least also using the amplitude of the backscatter pattern (Rm1, Rm2, Rm3).

**12.** Location-determining device according to Claim 11,
**characterized in that**

- the waveguide (50) is laid next to a section of rail (100), and
- the vibration, acting on the waveguide (50), in the location-determining section (51-55) is increased by means of a local mechanical coupling between the waveguide (50) and the section of rail (100) or reduced by a vibration-reducing device.

**13.** Location-determining device according to Claim 11 or 12,
**characterized in that** the waveguide (50) has, in the location-determining section (51-55), waveguide material with a higher or lower vibration sensitivity than in the two waveguide sections located in front of and behind the location-determining section (51-55).

**14.** Location-determining device according to one of the preceding Claims 11 to 13,
**characterized in that** the waveguide (50) along the section of rail (100) has a multiplicity of location-determining sections (51-55) in which the vibration sensitivity of the waveguide (50) and/or the vibration acting on the waveguide (50) is greater than or less than in the two waveguide sections located in front of and behind the respective location-determining section (51-55).

**15.** Location-determining device according to Claim 14,
**characterized in that** the arrangement of the location-determining sections (51-55) and/or the respective length of the location-determining sections (51-55) forms location coding.

**Revendications**

**1.** Procédé de location d'un véhicule (110) ferroviaire le long d'une voie ferrée (100) le long de laquelle est posé un guide d'ondes (50), dans lequel, dans le procédé, on injecte dans le guide d'ondes (50) des impulsions (Pin) électromagnétiques se succédant dans le temps et on reçoit, pour chaque impulsion envoyée, respectivement au moins un motif (Rm1, Rm2, Rm3) de rétrodiffusion produit par une rétrodiffusion induite par un véhicule de l'impulsion électromagnétique et on l'exploite,
**caractérisé en ce que**

- le guide d'ondes (50) a, le long de la voie ferrée (100), au moins un tronçon (51 à 55) de localisation, dans lequel la sensibilité aux vibrations du guide d'ondes (50) et/ou la vibration agissant sur le guide d'ondes (50) est plus grande ou plus petite qu'en dehors du tronçon (51 à 55) de localisation,
- on exploite l'amplitude du motif (Rm1, Rm2, Rm3) de rétrodiffusion reçu et
- on produit un signal (So) de localisation si l'amplitude du motif (Rm1, Rm2, Rm3) de rétrodiffusion reçu s'agrandit ou se rapetisse au cours du temps.

**2.** Procédé suivant la revendication 1,
**caractérisé en ce que**
on localise un véhicule (110) ferroviaire roulant sur la voie ferrée (100), la vibration agissant sur le guide d'ondes (50) étant, dans le tronçon (51 à 55) de localisation, augmentée au moyen d'un accouplement mécanique local entre le guide d'ondes (50) et la voie ferrée (100) ou réduit au moyen d'un dispositif de réduction de la vibration.

3. Procédé suivant la revendication 1 ou 2,
   **caractérisé en ce que**
   l'on augmente ou diminue la sensibilité aux vibrations du guide d'ondes (50) dans le tronçon (51 à 55) de localisation en utilisant, dans le tronçon (51 à 55) de localisation, de la matière de guide d'ondes ayant une sensibilité aux vibrations plus grande ou plus petite que dans les deux tronçons de guide d'ondes se trouvant avant et après le tronçon (51 à 55) de localisation.

4. Procédé suivant l'une des revendications précédentes,
   **caractérisé en ce que**
   on produit, en outre, un signal (ZOS) de localisation supplémentaire indiquant la localisation (Ls) du véhicule (110) ferroviaire.

5. Procédé suivant la revendication 4,
   **caractérisé en ce que**

   - on mesure des réflexions aux points (117) de perturbation introduit dans le guide d'ondes et connus par leur position et
   - on produit le signal (ZOS) de localisation supplémentaire si la réception du motif (Rm1, Rm2, Rm3) de rétrodiffusion coïncide dans le temps avec une réflexion par un point (117) de perturbation de ce genre.

6. Procédé suivant la revendication 4,
   **caractérisé en ce que**

   - on mesure le laps de temps (T1, T2, T3) entre l'injection de l'impulsion électromagnétique dans le guide d'ondes (50) et la détection du motif (Rm1, Rm2, Rm3) de rétrodiffusion associé et
   - à l'aide du laps de temps (T1, T2, T3) on produit, comme signal (ZOS) de localisation supplémentaire, un signal
   (Se) d'éloignement indiquant la localisation (Ls) du véhicule (110) ferroviaire.

7. Procédé suivant l'une des revendications précédentes 4 à 6,
   **caractérisé en ce que**
   on produit un signal (F) d'erreur si la distance entre la position du véhicule (110) indiquée par le signal (ZOS) de localisation supplémentaire et la position connue du tronçon (51 à 55) de localisation dépasse une valeur de seuil donnée à l'avance.

8. Procédé suivant l'une des revendications précédentes,
   **caractérisé en ce que**

   - le guide d'ondes (50) a, le long de la voie ferrée (100), une pluralité de tronçons (51 à 55) de localisation dans lesquels la sensibilité aux vibrations du guide d'ondes (50) et/ou la vibration agissant sur le guide d'ondes (50) est plus grande ou plus petite que dans les deux tronçons du guide d'ondes se trouvant avant et après le tronçon (51 à 55) de localisation et
   - on produit un signal (So) de localisation si, au cours du temps, l'amplitude du motif (Rm1, Rm2, Rm3) de rétrodiffusion reçu s'agrandit ou se rapetisse.

9. Procédé suivant la revendication 8,
   **caractérisé en ce que**
   lors de l'entrée du véhicule (110) ferroviaire dans la voie ferrée (100), après une production pour la première fois du signal (So) de localisation, on compte l'apparition des autres signaux (So) de localisation et on forme une information de localisation par l'état du compteur.

10. Procédé suivant l'une des revendications précédentes 8 à 9,
    **caractérisé en ce que**

    - l'agencement des tronçons (51 à 55) de localisation et/ou la longueur des tronçons (51 à 55) de localisation forment un codage de localisation et
    - lors de l'exploitation de la variation dans le temps du motif (Rm1, Rm2, Rm3) de rétrodiffusion, on détecte le codage de localisation et on effectue une distinction entre les tronçons (51 à 55) de localisation à l'aide du codage de localisation.

11. Dispositif de localisation pour localiser un véhicule (110) ferroviaire le long d'une voie ferrée (100) comprenant :

    - un guide d'ondes (50) posé le long de la voie ferrée (100),
    - un dispositif (20) de production d'impulsions pour produire et injecter des impulsions (Pin) électromagnétiques se succédant dans le temps dans le guide d'ondes (50),
    - un dispositif (30) de détection pour détecter des motifs (Rm1, Rm2, Rm3) de rétrodiffusion électromagnétique produit par rétrodiffusion induite par un véhicule et
    - un dispositif (60) d'exploitation pour exploiter les motifs (Rm1, Rm2, Rm3) de rétrodiffusion

**caractérisé en ce que**

- le guide d'ondes (50) a, le long de la voie (100) ferrée, au moins un tronçon (51 à 55) de localisation, dans lequel la sensibilité aux vibrations du guide d'ondes (50) et/ou la vibration agissant sur le guide d'ondes (50) est plus grande ou plus petite qu'en dehors du tronçon (51 à 55) de localisation et

- le dispositif (60) d'exploitation est conformé de manière à effectuer une localisation du véhicule (110) ferroviaire au moins aussi en tirant partie de l'amplitude du motif (Rm1, Rm2, Rm3) de rétrodiffusion.

12. Dispositif de localisation suivant la revendication 11, **caractérisé en ce que**

- le guide d'ondes (50) est posé à côté d'une voie ferrée (100) et

- la vibration agissant sur le guide d'ondes (50) est augmentée au tronçon (51 à 55) de localisation au moyen d'un accouplement mécanique local entre le guide d'ondes (50) et la voie ferrée (100) ou est réduite par un dispositif de réduction des vibrations.

13. Dispositif de localisation suivant la revendication 11 ou 12, **caractérisé en ce que** le guide d'ondes (50) a, dans le tronçon (51 à 55) de localisation, une matière de guide d'ondes ayant une sensibilité aux vibrations plus grande ou plus petite que dans les deux tronçons de guide d'ondes se trouvant avant et après le tronçon (51 à 55) de localisation.

14. Dispositif de localisation suivant l'une des revendications précédentes 11 à 13, **caractérisé en ce que** le guide d'ondes (50) a, le long de la voix ferrée (100), une pluralité de tronçons (51 à 55) de localisation dans lesquels la sensibilité aux vibrations du guide d'ondes (50) et/ou la vibration agissant sur le guide d'ondes (50) est plus grande ou plus petite que dans les deux tronçons du guide d'ondes se trouvant avant et après le tronçon (51 à 55) de localisation.

15. Dispositif de localisation suivant la revendication 14, **caractérisé en ce que** l'agencement des tronçons (51 à 55) de localisation et/ou la longueur des tronçons (51 à 55) de localisation forme un codage de localisation.

# FIG 1

EP 2 903 879 B1

EP 2 903 879 B1

FIG 2

Ir(t)

dt1

T1

Rm1

t=0                                                                          t

FIG 3

Ir(t)

T2

Rm2

t=0                                                                          t

FIG 4

Ir(t)

T3

Rm3

t=0                                                                          t

13

# FIG 5

EP 2 903 879 B1

FIG 6

FIG 7

FIG 8

FIG 9

FIG 10

EP 2 903 879 B1

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011027166 A1